# EUROPEAN PATENT APPLICATION

(11) **EP 4 124 503 A1**
(43) Date of publication of application: **01.02.2023**
(21) Application number: 22165790.1
(22) Date of filing: 31.03.2022
(51) Int. Cl.: B60L 58/18, B60L 58/22, B60L 58/27, H01M 10/44, H01M 10/48, H01M 10/615

(54) **CONTROL METHOD AND APPARATUS FOR TRACTION BATTERY, VEHICLE, MEDIUM, AND DEVICE**

(30) Priority: 26.07.2021 CN 202110845508
(71) Applicant: Nio Technology (Anhui) Co., Ltd, Hefei City, Anhui 230601 (CN)
(72) Inventor: ZENG, Shizhe, AnTing Town, Jiading Shanghai (CN); FANG, Jie, AnTing Town, Jiading Shanghai (CN); WANG, Linfeng, AnTing Town, Jiading Shanghai (CN); YE, Nan, AnTing Town, Jiading Shanghai (CN); WANG, Kai, AnTing Town, Jiading Shanghai (CN)
(74) Representative: Patentwerk B.V.

(57) **Abstract**

The disclosure relates to the technical field of electric vehicles, and in particular, to a control method and apparatus for a traction battery, a vehicle, a medium, and a device, aiming at solving the problem of how to conveniently and efficiently heat a traction battery, especially a large-capacity traction battery. To this end, the control method for a traction battery according to an embodiment of the disclosure comprises analyzing whether each traction battery needs to be heated on the basis of temperature information of the traction battery, and controlling a bidirectional DC converter and the traction battery which needs to be heated to form a charging and discharging circuit to cyclically charge and discharge the traction battery, so as to achieve the goal of heating the traction battery. By means of the foregoing steps, the characteristic of high internal resistance of a lithium-ion traction battery at a low temperature can be used to make the traction battery generate heat by means of a cyclic charging and discharging process, to achieve the heating of the traction battery, that is, the performance of the traction battery can be improved, the time for charging the traction battery is reduced, and the safety of the traction battery is further improved.

## Description

### Technical Field

The disclosure relates to the technical field of electric vehicles, and in particular, to a control method and apparatus for a traction battery, a vehicle, a medium, and a device.

### Background Art

In the process of continuous development of the technology for new energy vehicles, traction batteries, as core technology for new energy vehicles, have attracted increasingly more attention in terms of safety and charging and discharging performances. However, due to their own chemical characteristics, discharge capacity and discharge efficiency of lithium-ion traction batteries in low-temperature environment are greatly reduced compared with those in roomtemperature environment, which directly influences a distance per charge and acceleration performance of electric vehicles, and will have a great impact on user experience. In addition, when charged in the low-temperature environment, the lithium-ion traction batteries are further prone to lithium precipitation from a negative electrode, which leads in formation of lithium dendrites and influences the safety of the entire lithium-ion batteries.

In the prior art, to improve the performance of the lithium-ion traction batteries at a low temperature, a heating apparatus is usually provided in a battery pack, and the lithium-ion traction batteries are heated by means of air heating, liquid heating, resistance wire heating or a heat pipe, etc., so as to improve the battery capacity and the charging and discharging performance in the low-temperature environment. However, these heating methods all have the disadvantages of long heating time, high energy consumption, poor temperature uniformity, etc. In addition, due to the increasing capacity of the lithium-ion traction batteries, the foregoing methods are increasingly unable to meet the requirements of the vehicle performance.

Accordingly, there exists a need for a new solution for controlling a traction battery in this field to solve the foregoing problems.

### Summary of the Disclosure

To solve the foregoing problem in the prior art, i.e., to solve the problem of how to conveniently and efficiently heat a traction battery, especially a large-capacity traction battery, the disclosure provides a control method and apparatus for a traction battery, a vehicle, a medium, and a device.

According to a first aspect, a control method for a traction battery is provided, wherein the control method is applied to a vehicle, the vehicle comprises two traction batteries, and the traction batteries are connected by means of a bidirectional direct-current (DC) converter.

The control method comprises:
acquiring temperature information of each of the traction batteries;
analyzing whether each of the traction batteries needs to be heated based on the temperature information; and
controlling the bidirectional DC converter and the traction battery which needs to be heated to form a charging and discharging circuit, and cyclically charging and discharging the traction battery through the charging and discharging circuit to heat the traction battery.

In a technical solution of the foregoing control method for a traction battery, the temperature information includes cell temperature of the traction battery and ambient temperature, and the step of analyzing whether each of the traction batteries needs to be heated based on the temperature information specifically comprises:
if the traction battery is in a state-before-charging and the cell temperature is less than a cell temperature threshold, determining that a first type of heating is needed for the traction battery; or
if the traction battery is in a rest state under a vehicle rest condition and the ambient temperature is less than an ambient temperature threshold, determining that a second-type heating is needed for the traction battery.

The state-before-charging is a state in which a charging instruction is received before charging is started.

In a technical solution of the foregoing control method for a traction battery, the step of controlling the bidirectional DC converter and the traction battery which needs to be heated to form a charging and discharging circuit specifically comprises:
if the first type of heating is needed for one of the traction batteries, controlling the bidirectional DC converter and the traction battery which needs the first type of heating to form a charging and discharging circuit of first type, such that the traction battery and the bidirectional DC converter are capable of charging and discharging each other through the charging and discharging circuit of first type; or
if the first type of heating is needed for the two traction batteries, controlling the bidirectional DC converter and the two traction batteries to form a charging and discharging circuit of second type, such that the two traction batteries are capable of charging and discharging each other through the charging and discharging circuit of second type;
and/or the step of controlling the bidirectional DC converter and the traction battery which needs to be heated to form a charging and discharging circuit specifically comprises:
   if the second type of heating is needed for at least one of the traction batteries, forming a charging and discharging circuit for each traction battery which needs the second type of heating according to the following steps:
   obtaining available power and a state of charge of the traction battery which needs the second type of heating; and
   if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

In a technical solution of the foregoing control method for a traction battery, the step of cyclically charging and discharging the traction battery through the charging and discharging circuit specifically comprises:
when the traction battery which needs the first type of heating is cyclically charged and discharge through the charging and discharging circuit of first type, stopping the cyclic charging and discharging if it is detected that the cell temperature of the traction battery reaches a first preset temperature; or
when the traction battery which needs the second type of heating is cyclically charged and discharges through the charging and discharging circuit of first type, stopping the cyclic charging and discharging if it is detected that the cell temperature of the traction battery reaches the first preset temperature; or
when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-controlling the bidirectional DC converter and the traction battery that does not reach the first preset temperature to form a charging and discharging circuit of first type, and continuing to cyclically charge and discharge the traction battery that does not reach the first preset temperature through the charging and discharging circuit of first type, until the cell temperature of the traction battery reaches the first preset temperature; and
stopping the cyclic charging and discharging if it is detected that the cell temperatures of the two traction batteries both reach the first preset temperature.

In a technical solution of the foregoing control method for a traction battery, the control method further comprises:
in response to a received battery mode configuration instruction, respectively configuring the two traction batteries in a main battery mode and a standby battery mode;
and/or detecting whether the traction battery in the main battery mode fails; and
if so, switching the battery mode of the traction battery that does not fail to the main battery mode, and switching the battery mode of the traction battery that fails to the standby battery mode.

According to a second aspect, a control apparatus for a traction battery is provided, wherein the control apparatus is applied to a vehicle, the vehicle comprises two traction batteries, and the traction batteries are connected by means of a bidirectional DC converter.

The control apparatus comprises:
a temperature information acquisition module configured to acquire temperature information of each of the traction batteries;
a heating demand analysis module configured to analyze whether each of the traction batteries needs to be heated based on the temperature information; and
a heating control module configured to control the bidirectional DC converter and the traction battery which needs to be heated to form a charging and discharging circuit, and cyclically charging and discharging the traction battery through the charging and discharging circuit to heat the traction battery.

In a technical solution of the foregoing control apparatus for a traction battery, the temperature information includes cell temperature of a traction battery and ambient temperature, and the heating demand analysis module comprises:
a first heating demand unit configured to, if it is detected that the traction battery is in a state-before-charging and the cell temperature is less than a cell temperature threshold, determine that a first type of heating is needed for the traction battery; and
a second heating demand unit configured to, if it is detected that if the traction battery is in a rest state under a vehicle rest condition and the ambient temperature is less than an ambient temperature threshold, determine that a second type of heating is needed for the traction battery,
wherein the state-before-charging is a state in which a charging instruction is received before charging is started.

In a technical solution of the foregoing control apparatus for a traction battery, the heating control module comprises a first charging and discharging unit and/or a second charging and discharging unit and/or a third charging and discharging unit.

The first charging and discharging unit is configured to, if the heating demand analysis module determines that the first type of heating is needed for one of the traction batteries, control the bidirectional DC converter and the traction battery which needs the first type of heating to form a charging and discharging circuit of first type, such that the traction battery and the bidirectional DC converter are capable of charging and discharging each other through the charging and discharging circuit of first type.

The second charging and discharging unit is configured to, if the heating demand analysis module determines that if the first type of heating is needed for the two traction batteries, control the bidirectional DC converter and the two traction batteries to form a charging and discharging circuit of second type, such that the two traction batteries are capable of charging and discharging each other through the charging and discharging circuit of second type.

The third charging and discharging unit is configured to, if it is detected that the second type of heating is needed for at least one of the traction batteries, form a charging and discharging circuit for each traction battery which needs the second type of heating by means of the following operations:
obtaining available power and a state of charge of the traction battery which needs the second type of heating; and
if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

In a technical solution of the foregoing control apparatus for a traction battery, the first charging and discharging unit is further configured to, when the charging and discharging circuit of first type cyclically charges and discharges the traction battery which needs the second type of heating, stop the cyclic charging and discharging if it is detected that the cell temperature of the traction battery reaches a first preset temperature.

The second charging and discharging unit is further configured to, when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-control the bidirectional DC converter and the traction battery that does not reach the first preset temperature to form a charging and discharging circuit of first type, and continue to cyclically charge and discharge the traction battery that does not reach the first preset temperature through the charging and discharging circuit of first type, until the cell temperature of the traction battery reaches the first preset temperature; and stop the cyclic charging and discharging if it is detected that the cell temperatures of the two traction batteries both reach the first preset temperature; and

The third charging and discharging unit is further configured to, when the charging and discharging circuit of first type cyclically charges and discharges the traction battery which needs the second type of heating, stop the cyclic charging and discharging if it is detected that the cell temperature of the traction battery reaches a second preset temperature.

In a technical solution of the foregoing control apparatus for a traction battery, the control apparatus further comprises a main and standby battery configuration module and/or a main and standby battery switching module, the main and standby battery switching module comprising a main battery detection unit and a main and standby battery switching unit.

The main and standby battery configuration module is configured to, in response to a received battery mode configuration instruction, respectively configure the two traction batteries in a main battery mode and a standby battery mode.

The main battery detection unit is configured to detect whether the traction battery in the main battery mode fails.

The main and standby battery switching unit is configured to, if it is detected that the traction battery in the main battery mode fails, switch the battery mode of the traction battery that does not fail to the main battery mode, and switch the battery mode of the traction battery that fails to the standby battery mode.

According to a third aspect, a vehicle is provided, comprising a control apparatus for a traction battery according to any one of the technical solutions of a control apparatus for a traction battery described above, and two traction batteries, wherein the traction batteries are connected by means of a bidirectional DC converter.

According to a fourth aspect, a computer-readable storage medium is provided, wherein a plurality of program codes are stored in the computer-readable storage medium, and the program codes are adapted to loaded and run by a processor to cause a control method for a traction battery according to any one of the technical solutions of a control method for a traction battery described above to be carried out.

According to a fifth aspect, a computer device is provided, comprising a processor and a memory, wherein the memory is adapted to store a plurality of program codes, and the program codes are adapted to be loaded and run by the processor to cause a control method for a traction battery according to any one of the technical solutions of a control method for a traction battery described above to be carried out.

Solution 1. A control method for a traction battery, wherein the control method is applied to a vehicle, the vehicle comprises two traction batteries, and the traction batteries are connected by means of a bidirectional DC converter; and
the control method comprises:
acquiring temperature information of each of the traction batteries;
analyzing whether each of the traction batteries needs to be heated based on the temperature information; and
controlling the bidirectional DC converter and the traction battery which needs to be heated to form a charging and discharging circuit, and cyclically charging and discharging the traction battery through the charging and discharging circuit to heat the traction battery.

Solution 2. The control method for a traction battery according to solution 1, wherein the temperature information includes cell temperature of the traction battery and ambient temperature, and the step of analyzing whether each of the traction batteries needs to be heated based on the temperature information specifically comprises:
if the traction battery is in a state-before-charging and the cell temperature is less than a cell temperature threshold, determining that a first type of heating is needed for the traction battery; or
if the traction battery is in a rest state under a vehicle rest condition and the ambient temperature is less than an ambient temperature threshold, determining that a second-type heating is needed for the traction battery,
wherein the state-before-charging is a state in which a charging instruction is received before charging is started.

Solution 3. The control method for a traction battery according to solution 2, wherein the step of controlling the bidirectional DC converter and the traction battery which needs to be heated to form a charging and discharging circuit specifically comprises:
if the first type of heating is needed for one of the traction batteries, controlling the bidirectional DC converter and the traction battery which needs the first type of heating to form a charging and discharging circuit of first type, such that the traction battery and the bidirectional DC converter are capable of charging and discharging each other through the charging and discharging circuit of first type; or
if the first type of heating is needed for the two traction batteries, controlling the bidirectional DC converter and the two traction batteries to form a charging and discharging circuit of second type, such that the two traction batteries are capable of charging and discharging each other through the charging and discharging circuit of second type;
and/or
the step of controlling the bidirectional DC converter and the traction battery which needs to be heated to form a charging and discharging circuit specifically comprises:
if the second type of heating is needed for at least one of the traction batteries, forming a charging and discharging circuit for each traction battery which needs the second type of heating according to the following steps:
obtaining available power and a state of charge of the traction battery which needs the second type of heating; and
if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

Solution 4. The control method for a traction battery according to solution 3, wherein the step of cyclically charging and discharging the traction battery through the charging and discharging circuit specifically comprises:
when the traction battery which needs the first type of heating is cyclically charged and discharge through the charging and discharging circuit of first type, stopping the cyclic charging and discharging if it is detected that the cell temperature of the traction battery reaches a first preset temperature; or
when the traction battery which needs the second type of heating is cyclically charged and discharges through the charging and discharging circuit of first type, stopping the cyclic charging and discharging if it is detected that the cell temperature of the traction battery reaches the first preset temperature; or
when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-controlling the bidirectional DC converter and the traction battery that does not reach the first preset temperature to form a charging and discharging circuit of first type, and continuing to cyclically charge and discharge the traction battery that does not reach the first preset temperature through the charging and discharging circuit of first type, until the cell temperature of the traction battery reaches the first preset temperature; and
stopping the cyclic charging and discharging if it is detected that the cell temperatures of the two traction batteries both reach the first preset temperature.

Solution 5. The control method for a traction battery according to any one of solutions 1 to 4, further comprising:
in response to a received battery mode configuration instruction, respectively configuring the two traction batteries in a main battery mode and a standby battery mode;
and/or
detecting whether the traction battery in the main battery mode fails; and
if so, switching the battery mode of the traction battery that does not fail to the main battery mode, and switching the battery mode of the traction battery that fails to the standby battery mode.

Solution 6. A control apparatus for a traction battery, wherein the control method is applied to a vehicle, the vehicle comprises two traction batteries, and the traction batteries are connected by means of a bidirectional DC converter; and
the control apparatus comprises:
a temperature information acquisition module configured to acquire temperature information of each of the traction batteries;
a heating demand analysis module configured to analyze whether each of the traction batteries needs to be heated based on the temperature information; and
a heating control module configured to control the bidirectional DC converter and the traction battery which needs to be heated to form a charging and discharging circuit, and cyclically charging and discharging the traction battery through the charging and discharging circuit to heat the traction battery.

Solution 7. The control apparatus for a traction battery according to solution 6, wherein the temperature information includes cell temperature of the traction battery and ambient temperature, and the heating demand analysis module comprises:
a first heating demand unit configured to, if it is detected that the traction battery is in a state-before-charging and the cell temperature is less than a cell temperature threshold, determine that a first type of heating is needed for the traction battery; and
a second heating demand unit configured to, if it is detected that if the traction battery is in a rest state under a vehicle rest condition and the ambient temperature is less than an ambient temperature threshold, determine that a second type of heating is needed for the traction battery,
wherein the state-before-charging is a state in which a charging instruction is received before charging is started.

Solution 8. The control apparatus for a traction battery according to solution 7, wherein the heating control module comprises a first charging and discharging unit and/or a second charging and discharging unit and/or a third charging and discharging unit;
the first charging and discharging unit is configured to, if the heating demand analysis module determines that the first type of heating is needed for one of the traction batteries, control the bidirectional DC converter and the traction battery which needs the first type of heating to form a charging and discharging circuit of first type, such that the traction battery and the bidirectional DC converter are capable of charging and discharging each other through the charging and discharging circuit of first type;
the second charging and discharging unit is configured to, if the heating demand analysis module determines that if the first type of heating is needed for the two traction batteries, control the bidirectional DC converter and the two traction batteries to form a charging and discharging circuit of second type, such that the two traction batteries are capable of charging and discharging each other through the charging and discharging circuit of second type; and
the third charging and discharging unit is configured to, if it is detected that the second type of heating is needed for at least one of the traction batteries, form a charging and discharging circuit for each traction battery which needs the second type of heating by means of the following operations:
obtaining available power and a state of charge of the traction battery which needs the second type of heating; and
if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

Solution 9. The control apparatus for a traction battery according to solution 8, wherein
the first charging and discharging unit is further configured to, when the charging and discharging circuit of first type cyclically charges and discharges the traction battery which needs the second type of heating, stop the cyclic charging and discharging if it is detected that the cell temperature of the traction battery reaches a first preset temperature;
the second charging and discharging unit is further configured to, when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-control the bidirectional DC converter and the traction battery that does not reach the first preset temperature to form a charging and discharging circuit of first type, and continue to cyclically charge and discharge the traction battery that does not reach the first preset temperature through the charging and discharging circuit of first type, until the cell temperature of the traction battery reaches the first preset temperature; and stop the cyclic charging and discharging if it is detected that the cell temperatures of the two traction batteries both reach the first preset temperature; and
the third charging and discharging unit is further configured to, when the charging and discharging circuit of first type cyclically charges and discharges the traction battery which needs the second type of heating, stop the cyclic charging and discharging if it is detected that the cell temperature of the traction battery reaches a second preset temperature.

Solution 10: The control apparatus for a traction battery according to any one of solutions 6 to 9, wherein the control apparatus further comprises a main and standby battery configuration module and/or a main and standby battery switching module, the main and standby battery switching module comprising a main battery detection unit and a main and standby battery switching unit; wherein
the main and standby battery configuration module is configured to, in response to a received battery mode configuration instruction, respectively configure the two traction batteries in a main battery mode and a standby battery mode;
the main battery detection unit is configured to detect whether the traction battery in the main battery mode fails; and
the main and standby battery switching unit is configured to, if it is detected that the traction battery in the main battery mode fails, switch the battery mode of the traction battery that does not fail to the main battery mode, and switch the battery mode of the traction battery that fails to the standby battery mode.

Solution 11. A vehicle, comprising a control apparatus for a traction battery according to any one of solutions 6 to 10, and two traction batteries, wherein the traction batteries are connected by means of a bidirectional DC converter.

Solution 12. A computer-readable storage medium storing a plurality of program codes therein, wherein the program codes are adapted to be loaded and run by a processor to cause a control method for a traction battery according to any one of solutions 1 to 5 to be carried out.

Solution 13. A computer device, comprising a processor and a memory, wherein the memory is adapted to store a plurality of program codes, and the program codes are adapted to be loaded and run by a processor to cause a control method for a traction battery according to any one of solutions 1 to 5 to be carried out.

The foregoing one or more technical solutions of the disclosure have at least one or more of the following beneficial effects:
in the implementations of the technical solution of the disclosure, temperature information of two traction batteries can be acquired, whether each traction battery needs to be heated is analyzed on the basis of the temperature information of the two traction batteries, and a bidirectional DC converter and the traction battery which needs to be heated are further controlled to form a charging and discharging circuit which can cyclically charge and discharge the traction battery, to achieve the goal of heating the traction battery.

By means of the configuration of the foregoing steps, whether the two traction batteries need to be heated, i.e., whether a heating is needed, is analyzed on the basis of the temperature information of the two traction batteries, the bidirectional DC converter and the traction battery which needs to be heated are further controlled to form a charging and discharging circuit further on the basis of the need for heating the two traction batteries, and the traction battery which needs to be heated can be cyclically charged and discharged through the charging and discharging circuit, so as to heat the traction battery. In the technical solutions of the control method for a traction battery, a traction battery, especially a large-capacity traction battery, can be heated conveniently and efficiently, stored energy and discharge power of the battery increase, and the time for charging the traction battery can be effectively reduced, such that the performance of the traction battery and the performance of a vehicle in low temperature environment are further improved.

### Brief Description of the Drawings

The disclosure of the disclosure will become more readily understood with reference to the accompanying drawings. Those skilled in the art will readily appreciate that the accompanying drawings are merely for the purpose of illustration, and are not intended to limit the scope of protection of the disclosure. In the figures:
FIG. 1 is a schematic flowchart of main steps of a control method for a traction battery according to an embodiment of the disclosure;
FIG. 2 is a block diagram of a main structure of a control apparatus for a traction battery according to an embodiment of the disclosure;
FIG. 3 is a partial structural schematic diagram of two traction batteries connected to a bidirectional DC converter according to an embodiment of the disclosure;
FIG. 4 is a schematic diagram of discharging of a first traction battery and energy storage by a bidirectional DC converter according to an embodiment of the disclosure;
FIG. 5 is a schematic diagram of energy release by a bidirectional DC converter and charging of a second traction battery according to an embodiment of the disclosure;
FIG. 6 is a schematic diagram of discharging of a second traction battery and energy storage by a bidirectional DC converter according to an embodiment of the disclosure;
FIG. 7 is a schematic diagram of energy release by a bidirectional DC converter and charging of a first traction battery according to an embodiment of the disclosure;
FIG. 8 is a simulation waveform diagram of a control method for a traction battery according to an embodiment of the disclosure;
FIG. 9 is a trend chart showing changes in internal resistance of a ternary polymer lithium battery as function of temperature; and
FIG. 10 is a trend chart showing changes in internal resistance of a lithium iron phosphate battery as function of temperature.

### List of reference numerals:

1: first traction battery; 2: second traction battery; 3: bidirectional DC converter.

### Detailed Description of Embodiments

Some embodiments of the disclosure are described below with reference to the accompanying drawings. It should be understood by those skilled in the art that these implementations are only used to explain the technical principles of the disclosure and are not intended to limit the scope of protection of the disclosure.

In the description of the disclosure, a "module" and a "processor" may include hardware, software, or a combination thereof. A module may include a hardware circuit, various suitable sensors, a communication port, and a memory, or may include a software part, such as program code, or may be a combination of software and hardware. The processor may be a central processing unit, a microprocessor, a digital signal processor, or any other suitable processor. The processor has a data and/or signal processing function. The processor may be implemented in software, hardware, or a combination thereof. A non-transitory computer-readable storage medium includes any suitable medium that can store program code, such as a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

In recent years, with the continuous development of new energy vehicles, traction batteries have become core technology of new energy vehicles, and their safety and power performance are main parameters of new energy vehicles. However, due to chemical characteristics of lithium-ion traction batteries, discharge capacity and power of the lithium-ion traction batteries in low-temperature environment are greatly reduced compared with those in roomtemperature environment, which directly influences a distance per charge and acceleration performance of new energy vehicles, and will have a great impact on user experience. In addition, when charged in the low-temperature environment, the lithium-ion traction batteries may be further subjected to lithium precipitation from a negative electrode, which leads in formation of lithium dendrites and also influences the safety of the traction batteries.

To improve the performance of the lithium-ion traction batteries in the low-temperature environment, a heating apparatus is usually provided in a traction battery pack, and the traction batteries are heated by means of air heating, liquid heating, resistance wire heating or a heat pipe, etc., so as to improve the capacity and charging and discharging performance of the traction batteries in the low-temperature environment. However, these heating methods all have the disadvantages of long heating time, high energy consumption, poor temperature uniformity, etc. With the continuous increase of traction battery capacity, these heating methods are increasingly unable to meet requirements of performance of new energy vehicles.

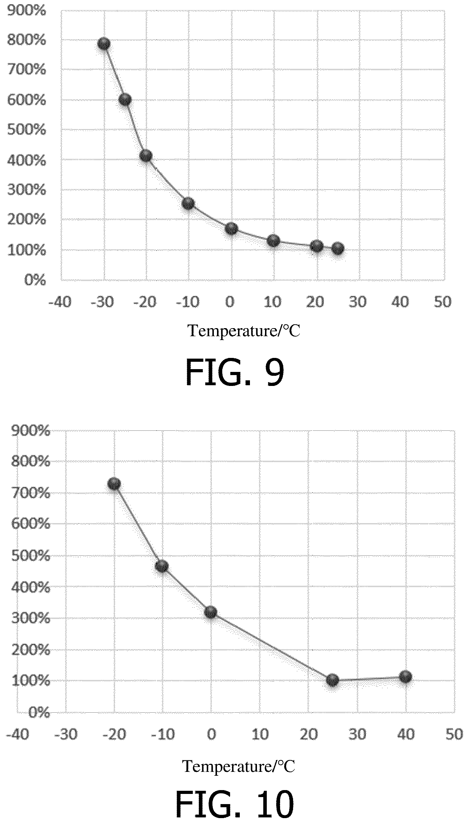

Based on their own chemical characteristics, internal resistance of the lithium-ion traction batteries increases significantly with the decrease in temperature. Referring to FIGS. 9 and 10, internal resistance of a ternary polymer lithium battery at -30°C rises to 8 times that at room temperature, and a lithium iron phosphate battery is even worse, with its internal resistance at -20°C rising to 7-8 times that at room temperature. This is the disadvantage of the lithium-ion traction battery at a low temperature due to its own chemical characteristics, but the characteristic of high internal resistance of the lithium-ion traction battery at low temperature can be used to generate energy by charging and discharging in a highfrequency oscillation manner, to achieve rapid self-heating of the lithium-ion traction battery. The ternary polymer lithium battery refers to a lithium battery with a positive electrode of a ternary positive electrode material, which is nickel-cobalt lithium manganate (Li(NiCoMn)02) or nickel-cobalt aluminate. The lithium iron phosphate battery is a lithium-ion battery using lithium iron phosphate (LiFeP04) as a positive electrode material and carbon as a negative electrode material.

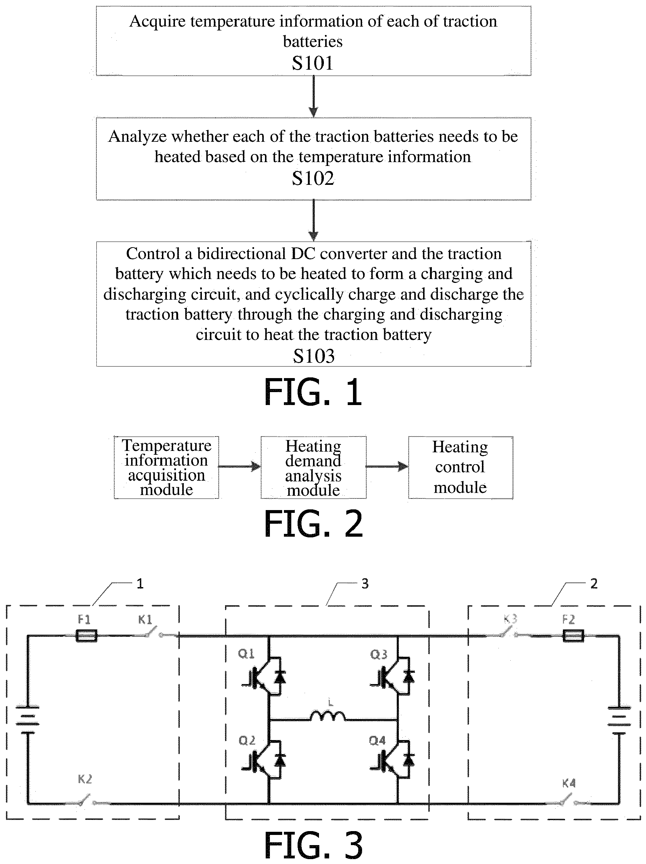

Referring to FIGS. 1 and 3, FIG. 1 is a schematic flowchart of main steps of a control method for a traction battery according to an embodiment of the disclosure, and FIG. 3 is a partial structural schematic diagram of two traction batteries connected to a bidirectional DC converter 3 according to an embodiment of the disclosure. The control method for a traction battery in this embodiment of the disclosure is applied to a vehicle. As shown in FIG. 3, the vehicle in this embodiment of the disclosure comprises two traction batteries which are connected by means of the bidirectional DC converter 3. It should be noted that, in order to facilitate the illustration of a charging and discharging circuit formed by a traction battery and the bidirectional DC converter in this embodiment of the disclosure, FIG. 3 only shows components related to this embodiment of the disclosure, and not all components in a connection structure for the traction battery and the bidirectional DC converter are shown.

As shown in FIG. 1, the control method for a traction battery according to this embodiment of the disclosure mainly comprises the following steps.

Step S101: acquiring temperature information of each of the traction batteries.

In this embodiment, the temperature information of a first traction battery 1 and a second traction battery 2 can be acquired to determine the temperature information of the two traction batteries.

Step S102: analyzing whether each of the traction batteries needs to be heated based on the temperature information.

In this embodiment, whether the first traction battery 1 and the second traction battery 2 need to be heated is analyzed based on the acquired temperature information of the two traction batteries, i.e., analyzing whether the first traction battery 1 and the second traction battery 2 are at a low temperature and need to be heated.

Step S103: controlling the bidirectional DC converter 3 and the traction battery which needs to be heated to form a charging and discharging circuit, and cyclically charging and discharging the traction battery through the charging and discharging circuit to heat the traction battery.

In this embodiment, for the traction battery which needs to be heated, the bidirectional DC converter 3 and the traction battery can be controlled to form a charging and discharging circuit, and the charging and discharging circuit cyclically charges and discharges the traction battery by using the direct-current converter. The characteristic of the high internal resistance of the traction battery such as a lithium-ion traction battery at a low temperature is used, such that the traction battery can generate heat during the cyclic charging and discharging process to achieve self-heating of the traction battery.

Referring to FIG. 3, in this embodiment, the two traction batteries (the first traction battery 1 and the second traction battery 2) are connected by means of the bidirectional DC converter 3, wherein the bidirectional DC converter 3 is a bidirectional full-bridge DC converter of a full-bridge structure. The bidirectional DC converter 3 is composed of four power switching devices (power switching devices Q1-Q4 shown in FIG. 3) and an inductor (inductor L shown in FIG. 3), and each power switching device is further connected in anti-parallel to a diode.

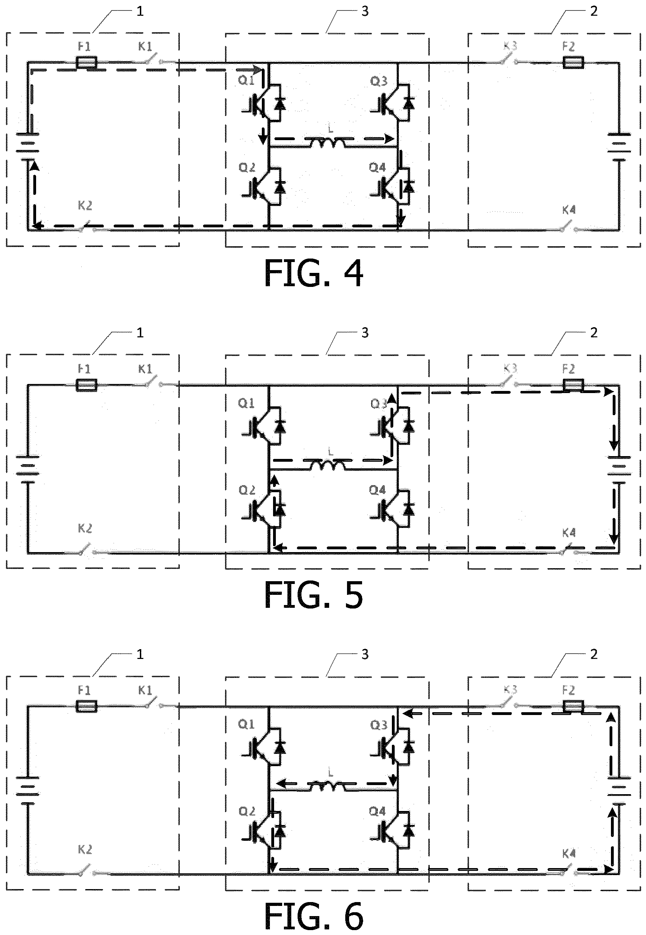

Taking the first traction battery 1 which needs to be heated as an example, a charging and discharging circuit formed by the bidirectional DC converter 3 and the first traction battery 1 will be described below with reference to FIG. 4.

### 1. Discharging circuit for the first traction battery 1

Referring to FIG. 4, switches K1 and K2 are first closed, then the power switching devices Q1 and Q4 are controlled to be switched on and the power switching devices Q2 and Q3 are controlled to be switched off in the bidirectional DC converter 3, to form a discharging circuit for the first traction battery 1, i.e., a discharging circuit formed by the first traction battery 1, the power switching device Q1, the inductor L, and the power switching device Q4, such that the first traction battery 1 may discharge to the inductor L through the discharging circuit and the inductor L stores electric energy.

### 2. Charging circuit for the first traction battery 1

Still referring to FIG. 4, the switches K1 and K2 remain closed, and then the power switching devices Q2 and Q3 are controlled to be switched on and the power switching devices Q1 and Q4 are controlled to be switched off in the bidirectional DC converter 3, to form a charging circuit for the first traction battery 1, i.e., a charging circuit formed by the first traction battery 1, the power switching device Q2, the inductor L, and the power switching device Q3, such that the inductor L may discharge to the first traction battery 1 through the charging circuit and the first traction battery 1 stores electric energy (is charged).

It should be noted that K1, K2, K3, and K4 in FIG. 4 all represent switches, and F1 and F2 both represent overcurrent protection apparatuses such as fuses. In addition, the method for controlling the charging and discharging circuit formed by the bidirectional DC converter 3 and the second traction battery 2 in a similar manner as the foregoing method, and for the sake of brevity, will not be described again herein.

In steps S101 to S103 described above, in the embodiment of the disclosure, after the temperature information of the first traction battery 1 and the second traction battery 2 is acquired, whether each traction battery needs to be heated is analyzed based on the temperature information, and the bidirectional DC converter 3 and the traction battery which needs to be heated are further controlled to form a charging and discharging circuit to cyclically charge and discharge the traction battery which needs to be heated. The characteristic of the high internal resistance of the traction battery such as a lithium-ion traction battery at a low temperature is used, such that the traction battery can generate heat during the cyclic charging and discharging process to achieve heating of the traction battery, i.e., the performance of the traction battery can be improved, which reduces the time for charging the traction battery and further improves the safety of the traction battery.

The foregoing steps S102 and S103 will be further described below.

In an alternative implementation of step S102 in the embodiment of the disclosure, the vehicle according to this embodiment of the disclosure comprises a temperature sampling module configured to acquire temperature information of a traction battery, and the temperature information may include cell temperature of the traction battery and ambient temperature. In this implementation, the temperature sampling module may comprise a first temperature sampling sub-module and a second temperature sampling sub-module, wherein the first temperature sampling sub-module is configured to acquire ambient temperature information of the traction battery, and the second temperature sampling sub-module is configured to acquire cell temperature information of the traction battery. A plurality of sampling points may be set by the second temperature sampling sub-module to ensure that the acquired cell temperature information of the traction battery is more accurate. Step S102 may specifically comprise the following steps.

Step S1021: if the traction battery is in a state-before-charging and the cell temperature is less than a cell temperature threshold, determining that a first type of heating is needed for the traction battery.

Step S1022: if the traction battery is in a rest state under a vehicle rest condition and the ambient temperature is less than an ambient temperature threshold, determining that a second type of heating is needed for the traction battery.

The state-before-charging is a state in which a charging instruction is received before charging is started.

Specifically, before the traction battery receives the charging instruction and starts to be charged, an analysis is made on whether the cell temperature of the traction is less than the cell temperature threshold. If yes, it is determined that the traction battery needs to be heated, and the first type of heating is needed. When the vehicle is in a rest condition, the traction battery is also in a rest state. In this case, an analysis is made on whether the ambient temperature is less than the ambient temperature threshold. If yes, it is determined that the traction battery needs to be heated, and the second type of heating is needed. The cell temperature threshold and the ambient temperature threshold may be set according to actual requirements. It should be noted that the charging instruction refers to an instruction for supplementing electric energy to the traction battery. When the traction battery needs to be charged to supplement electric energy, a user of the vehicle may input the charging instruction by controlling a charging device such as a charging pile or an onboard device such as an onboard information entertainment product. The foregoing charging process for supplementing electric energy to the traction battery is different from the charging process for cyclically charging and discharging the traction battery through the charging and discharging circuit in the embodiment of the disclosure. In an embodiment of the disclosure, after the charging instruction is received, the traction battery may be first cyclically charged and discharged through the charging and discharging circuit, such that the temperature of the traction battery reaches a certain temperature, and then the traction battery may be charged to supplement electric energy.

In an alternative implementation of step S103 in the embodiment of the disclosure, step S103 may specifically comprise the following steps.

Step S1031: if the first type of heating is needed for one of the traction batteries, controlling the bidirectional DC converter 3 and the traction battery which needs the first type of heating to form a charging and discharging circuit of first type, such that the traction battery and the bidirectional DC converter 3 are capable of charging and discharging each other through the charging and discharging circuit of first type.

In this implementation, if the first type of heating is needed for one traction battery (the first traction battery 1 or the second traction battery 2), i.e., when one traction battery is in a state-before-charging and the cell temperature is less than the cell temperature threshold, the bidirectional DC converter 3 and the traction battery which needs the first-type heating are controlled to form the charging and discharging circuit of first type, such that the traction battery which need the first type of heating and the bidirectional DC converter 3 are capable of charging and discharging each other through the charging and discharging circuit of first type.

Specifically, when the first traction battery 1 needs the first type of heating, referring to FIG. 3, the bidirectional DC converter 3 and the first traction battery 1 may be controlled to form the charging and discharging circuit of first type as per the following steps 11 to 14, and the first traction battery 1 and the bidirectional DC converter 3 charge and discharge each other through the charging and discharging circuit of first type.

Step 11: controlling the switches K1 and K2 to be closed, and controlling the switches K3 and K4 to be opened.

Step 12: controlling the power switching devices Q1 and Q4 to be switched on and the power switching devices Q2 and Q3 to be switched off in the bidirectional DC converter 3 to form a discharging circuit in the charging and discharging circuit of first type, such that the first traction battery 1 can discharge to the inductor L through this discharging circuit.

Step 13: after the first traction battery 1 discharges to the inductor L for a period of time, controlling the power switching devices Q2 and Q3 to be switched on and the power switching devices Q1 and Q4 to be switched off in the bidirectional DC converter 3 to form a charging circuit in the charging and discharging circuit of first type, such that the inductor L can discharge to the first traction battery 1 through this discharging circuit and the first traction battery 1 stores electric energy (is charged).

Step 14: turning back to step 12 after the inductor L discharges to the first traction battery 1 for a period of time. Steps 12 to 14 are repeated to cyclically charge and discharge the first traction battery 1.

When the second traction battery 2 needs the first type of heating, referring to FIG. 3, the bidirectional DC converter 3 and the first traction battery 2 may be controlled to form the charging and discharging circuit of first type as per the following steps 21 to 24, and the second traction battery 2 and the bidirectional DC converter 3 charge and discharge each other through the charging and discharging circuit of first type.

Step 21: controlling the switches K1 and K2 to be opened, and controlling the switches K3 and K4 to be closed.

Step 22: controlling the power switching devices Q2 and Q3 to be switched on and the power switching devices Q1 and Q4 to be switched off in the bidirectional DC converter 3 to form a discharging circuit in the charging and discharging circuit of first type, such that the second traction battery 2 can discharge to the inductor L through this discharging circuit.

Step 23: after the second traction battery 2 discharges to the inductor L for a period of time, controlling the power switching devices Q1 and Q4 to be switched on and the power switching devices Q2 and Q3 to be switched off in the bidirectional DC converter 3 to form a charging circuit in the charging and discharging circuit of first type, such that the inductor L can discharge to the second traction battery 2 through this discharging circuit and the second traction battery 2 stores electric energy (is charged).

Step 24: turning back to step 22 after the inductor L discharges to the second traction battery 2 for a period of time. Steps 22 to 24 are repeated to cyclically charge and discharge the second traction battery 2.

Step S1032: if the first type of heating is needed for the two traction batteries, controlling the bidirectional DC converter 3 and each of the two traction batteries to form a charging and discharging circuit of second type, such that the two traction batteries are capable of charging and discharging each other through the charging and discharging circuit of second type.

In this implementation, if the first type of heating is needed for the two traction batteries (the first traction battery 1 and the second traction battery 2), the bidirectional DC converter 3 and the two traction batteries form a charging and discharging circuit of second type, such that the two traction batteries are capable of charging and discharging each other in the charging and discharging circuit of second type.

Specifically, when the first type of heating is needed for the two traction batteries, referring to FIGS. 4 to 7, the bidirectional DC converter 3, the first traction battery 1 and the second traction battery 2 can be controlled to form a charging and discharging circuit of second type as per the following steps 31 to 36, and the first traction battery 1 and the second traction battery 2 charge and discharge each other through the charging and discharging circuit of second type.

Step 31: controlling the switches K1, K2, K3 and K4 to be closed.

Step 32: as shown in FIG. 4, controlling the power switching devices Q1 and Q4 to be switched on and the power switching devices Q2 and Q3 to be switched off in the bidirectional DC converter 3 to form a first discharging circuit in the charging and discharging circuit of second type, such that the first traction battery 1 can discharge to the inductor L through this circuit.

Step 33: after the first traction battery 1 discharges to the inductor L for a period of time, as shown in FIG. 5, controlling the power switching devices Q1 and Q4 to be switched off and the power switching devices Q2 and Q3 to be switched on in the bidirectional DC converter 3 to form a first charging circuit in the charging and discharging circuit of second type, such that the inductor L can discharge to the second traction battery 2 through this circuit and the second traction battery 2 stores electric energy (is charged).

Step 34: after the inductor L discharges to the second traction battery 2 for a period of time, as shown in FIG. 6, controlling the power switching devices Q1 and Q4 to be switched off and the power switching devices Q2 and Q3 to be switched on in the bidirectional DC converter 3 to form a second discharging circuit in the charging and discharging circuit of second type, such that the second traction battery 2 can discharge to the inductor L through this circuit.

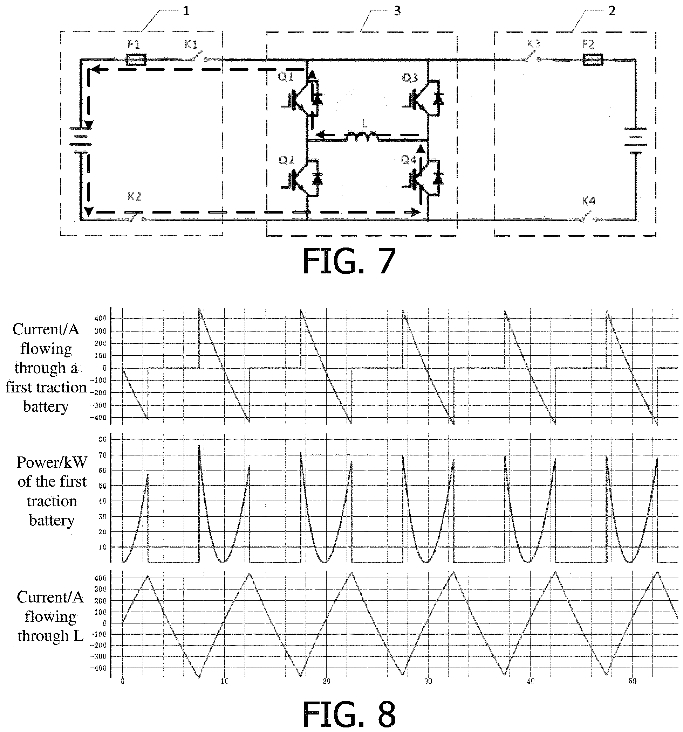

Step 35: after the second traction battery 2 discharges to the inductor L for a period of time, as shown in FIG. 7, controlling the power switching devices Q2 and Q3 to be switched off and the power switching devices Q1 and Q4 to be switched on in the bidirectional DC converter 3 to form a second charging circuit in the charging and discharging circuit of second type, such that the inductor L can discharge to the first traction battery 1 through this circuit and the first traction battery 1 stores electric energy (is charged).

Step 36: turning back to step 32 after the inductor L discharges to the first traction battery 1 for a period of time. Steps 32 to 35 are repeated to cyclically charge and discharge the first traction battery 1 and the second traction battery 2.

In an example, when the first traction battery 1, the second traction battery 2 and the bidirectional DC converter 3 form the charging and discharging circuit of second type for cyclic charging and discharging, a simulation waveform diagram of the cyclic charging and discharging is shown in FIG. 8, wherein a waveform diagram at the top in FIG. 8 represents a waveform diagram of a current flowing through the first traction battery 1, a waveform diagram at the middle represents a waveform diagram of power changes of the first traction battery 1, and a waveform diagram at the bottom represents a waveform diagram of a current flowing through the inductor L. It may be known from the simulation waveform of the cyclic charging and discharging shown in FIG. 8 that, with the control method according to an embodiment of the disclosure applied to cyclically charge and discharge the first traction battery 1 and the second traction battery 2, when the internal resistance of the traction battery at a low temperature is 320 mohms, an average heating power may reach 11.5 kW, and the heating rate may reach 2°C/min or above, thereby rapidly heating the traction battery, improving the performance of the vehicle and reducing charging time.

In another alternative implementation of step S103 in the embodiment of the disclosure, if the second type of heating is needed for at least one of the traction batteries, a charging and discharging circuit is formed for each traction battery which needs the second type of heating according to the following steps:
Step S1033: obtaining available power and a state of charge of the traction battery which needs the second type of heating; and
Step S1034: if the available power is less than a power threshold and the state of charge is greater than a state-of-charge threshold, controlling the bidirectional DC converter 3 and the traction battery to form a charging and discharging circuit of first type, such that the traction battery and the bidirectional DC converter 3 are capable of charging and discharging each other through the charging and discharging circuit of first type. The first type of charging circuit is formed in a similar manner as above, and therefore details are not described herein again for simplicity of description.

In this implementation, if a second type of heating is needed for the traction battery, i.e., if the traction battery is in a rest state under a vehicle rest condition and the ambient temperature is less than the ambient temperature threshold, available power and a state of charge of the traction battery are obtained, and an actual heating demand of the traction battery is further determined based on the available power and the state of charge. If the available power is less than a power threshold and the state of charge is greater than a charge threshold, the traction battery and the bidirectional DC converter 3 are controlled to form a charging and discharging circuit of first type to achieve mutual charging and discharging.

The available power is a parameter negatively related to the state of charge and the cell temperature of a traction battery. In this embodiment, the available power of each traction battery can be obtained by using a conventional method for obtaining available power of a traction battery in the technical field of traction batteries. For example, the available power of each traction battery can be obtained by using a method for estimating available power of a traction battery by using a state of charge of a traction battery and the temperature of the traction battery as disclosed in a patent application publication No. CN 108072844 A. In addition, those skilled in the art may also use other methods for estimating available power of a traction battery according to actual needs. The state of charge of a traction battery is the SOC (State of charge) of the traction battery, which is used to reflect the residual capacity of the battery. If the state of charge of the traction battery is less than the state-of-charge threshold, it means that the state of charge of the traction battery is excessively low at this time, and it is unnecessary to spend energy to heat the traction battery.

In still another alternative implementation of step S103 in the embodiment of the disclosure, step S103 may further comprise the following steps.

Step S1035: when the charging and discharging circuit of first type cyclically charges and discharges the traction battery which needs the first type of heating, stopping the cyclic charging and discharging if it is detected that the cell temperature of the traction battery reaches a first preset temperature. As an example, referring to the implementation shown in FIGS. 11 to 14 described above, in which the bidirectional DC converter 3 and the first traction battery 1 are controlled to form a charging and discharging circuit of first type and the first traction battery 1 and the bidirectional DC converter 3 charge and discharge each other through the charging and discharging circuit of first type, if it is detected that the cell temperature of the first traction battery 1 reaches the first preset temperature, the cyclic charging and discharging of the first traction battery 1 is stopped.

In this implementation, when the traction batteries are in the state-before-charging and one of the traction batteries needs to be heated, the traction battery which needs to be heated and the bidirectional DC converter 3 form a charging and discharging circuit of first type for cyclic charging and discharging, until the cell temperature of the traction battery reaches the first preset temperature. The first preset temperature may be determined on the basis of an initial cell temperature of the traction battery enabling the charging efficiency to be maximized when the traction battery is charged to supplement electric energy. For example, if the initial cell temperature of the traction battery enabling the charging efficiency to be maximized is temperature a, while actual cell temperature of the traction battery is b and b is less than a, the cyclic charging and discharging may be stopped when the actual cell temperature of the traction battery reaches the temperature a. Further, in this implementation, when the cell temperature of the traction battery reaches the first preset temperature and the cyclic charging and discharging is stopped, the traction battery may be charged to supplement electric energy. The first type of charging circuit is formed in a similar manner as above, and therefore details are not described herein again for simplicity of description.

Step S1036: when the charging and discharging circuit of first type cyclically charges and discharges the traction battery which needs the second type of heating, stopping the cyclic charging and discharging if it is detected that the cell temperature of the traction battery reaches the first preset temperature.

In this embodiment, when the traction battery is in a rest state under a vehicle rest condition and the traction battery needs to be heated, the traction battery and the bidirectional DC converter 3 are cyclically charged and discharged, until the cell temperature of the traction battery reaches the first preset temperature.

Step S1037: when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-controlling the bidirectional DC converter 3 and the traction battery that does not reach the preset temperature to form a charging and discharging circuit of first type, and continuing to cyclically charge and discharge the traction battery that does not reach the first preset temperature through the charging and discharging circuit of first type, until the cell temperature of the traction battery reaches the first preset temperature; and stopping the cyclic charging and discharging if it is detected that the cell temperatures of the two traction batteries both reach the first preset temperature.

In this embodiment, when the traction batteries are in a state-before-charging and both of the traction batteries (the first traction battery 1 and the second traction battery 2) need to be heated, the two traction batteries and the bidirectional DC converter 3 form a charging and discharging circuit of second type for cyclic charging and discharging. If one of the traction batteries (the first traction battery 1 or the second traction battery 2) reaches the first preset temperature while the other traction battery does not reach the first preset temperature, the traction battery that does not reach the first preset temperature and the bidirectional DC converter 3 form a first charging and discharging circuit to continue cyclic charging and discharging, until this traction battery also reaches the first preset temperature. The cyclic charging and discharging is stopped when it is detected that the two traction batteries both reach the first preset temperature.

In an embodiment of the disclosure, in addition to steps S101 to S103 in the foregoing embodiment of the method, the control method for a traction battery may further comprise:
Step S104: in response to a received battery mode configuration instruction, respectively configuring the two traction batteries in a main battery mode and a standby battery mode.

In this embodiment, after the battery mode configuration instruction is received, the two power batteries (the first traction battery 1 and the second traction battery 2) are respectively configured in the main battery mode and the standby battery mode according to the battery mode configuration instruction, i.e., one traction battery serves as a main battery, and in this case this battery provides power for the vehicle; the other traction battery is a standby battery, and when the main battery cannot provide power for the vehicle as usual, the standby battery will provides power for the vehicle.

In an embodiment of the disclosure, in addition to steps S101 to S104 in the foregoing embodiment of the method, the control method for a traction battery may further comprise the following steps.

Step S105: detecting whether the traction battery in the main battery mode fails; and if so, preceding to step S106, and otherwise, keeping an original state.

Step S106: switching the battery mode of the traction battery that does not fail to the main battery mode, and switching the battery mode of the traction battery that fails to the standby battery mode.

In this embodiment, it is detected whether the traction battery in the main battery mode fails. If the traction battery in the main battery mode fails, the battery mode of the traction battery that does not fail is switched to the main battery mode, and the battery mode of the traction battery that fails is switched to the standby battery mode. For example, when the first traction battery 1 is in the main battery mode, a system automatically detects whether the first traction battery 1 fails. If the first traction battery 1 fails, the battery mode of the second traction battery 2 is switched to the main battery mode, and the battery mode of the first traction battery 1 is switched to the standby battery mode.

It should be noted that although the steps are described in a specific order in the foregoing embodiment, those skilled in the art can understand that in order to achieve the effects of the disclosure, different steps are not necessarily performed in this order, but may be performed simultaneously (in parallel) or in another order, and these variations all fall within the scope of protection of the disclosure.

Further, the disclosure further provides a control apparatus for a traction battery.

Referring to FIG. 2, FIG. 2 is a block diagram of a main structure of a control apparatus for a traction battery according to an embodiment of the disclosure. As shown in FIG. 2, the control apparatus for a traction battery in this embodiment of the disclosure may comprise a temperature information acquisition module, a heating demand analysis module, and a heating control module. In this embodiment, the temperature information acquisition module may be configured to acquire temperature information of each traction battery. The heating demand analysis module may be configured to analyze whether each traction battery needs to be heated based on the temperature information. The heating control module may be configured to control the bidirectional DC converter 3 and a traction battery which needs to be heated to form a charging and discharging circuit, and cyclically charge and discharge the traction battery through the charging and discharging circuit to heat the traction battery.

In an implementation, the temperature information may include cell temperature of a traction battery and ambient temperature, and the heating demand analysis module may comprise a first heating demand unit and a second heating demand unit. In this implementation, the first heating demand unit may be configured to, if it is detected that the traction battery is in a state-before-charging and the cell temperature is less than a cell temperature threshold, determine that a first type of heating is needed for the traction battery. The second heating demand unit may be configured to, if it is detected that if the traction battery is in a rest state under a vehicle rest condition and the ambient temperature is less than an ambient temperature threshold, determine that a second type of heating is needed for the traction battery. The state-before-charging is a state in which a charging instruction is received before charging is started.

In an implementation, the heating control module may comprise a first charging and discharging unit. In this implementation, the first charging and discharging unit may be configured to, if the heating demand analysis module determines that the first type of heating is needed for one traction battery, control the bidirectional DC converter 3 and the traction battery which needs the first type of heating to form a charging and discharging circuit of first type, such that the traction battery and the bidirectional DC converter 3 are capable of charging and discharging each other through the charging and discharging circuit of first type.

In an implementation, the heating control module may comprise a second charging and discharging unit. In this implementation, the second charging and discharging unit may be configured to, if the heating demand analysis module determines that if the first of type heating is needed for the two traction batteries, control the bidirectional DC converter 3 and the two traction batteries to form a charging and discharging circuit of second type, such that the two traction batteries are capable of charging and discharging each other through the charging and discharging circuit of second type.

In an implementation, the heating control module may further comprise a third charging and discharging unit. In this implementation, the third charging and discharging unit may be configured to, if it is detected that the second type of heating is needed for at least one of the traction batteries, form a charging and discharging circuit for each traction battery which needs the second type of heating by means of the following operations:
obtaining available power and a state of charge of the traction battery which needs the second type of heating; and
if the available power is less than a power threshold and the state of charge is greater than a state-of-charge threshold, controlling the bidirectional DC converter 3 and the traction battery to form a charging and discharging circuit of first type, such that the traction battery and the bidirectional DC converter 3 are capable of charging and discharging each other through the charging and discharging circuit of first type.

In an implementation, the first charging and discharging unit may be further configured to, when the charging and discharging circuit of first type cyclically charges and discharges the traction battery which needs the first type of heating, stop the cyclic charging and discharging if it is detected that the cell temperature of the traction battery reaches a first preset temperature. The second charging and discharging unit may be further configured to, when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-control the bidirectional DC converter 3 and the traction battery that does not reach the first preset temperature to form a charging and discharging circuit of first type, and continue to cyclically charge and discharge the traction battery that does not reach the first preset temperature through the charging and discharging circuit of first type, until the cell temperature of the traction battery reaches the first preset temperature; and stopping the cyclic charging and discharging if it is detected that the cell temperatures of the two traction batteries both reach the first preset temperature. The third charging and discharging unit may be further configured to, when the charging and discharging circuit of first type cyclically charges and discharges the traction battery which needs the second type of heating, stop the cyclic charging and discharging if it is detected that the cell temperature of the traction battery reaches a first preset temperature.

In an implementation, the control apparatus may further comprise a main and standby battery configuration module. In this implementation, the main and standby battery configuration module may be configured to, in response to a received battery mode configuration instruction, respectively configure the two traction batteries in a main battery mode and a standby battery mode.

In an implementation, the control apparatus may further comprise a main and standby battery switching module, and the main and standby battery switching module may comprise a main battery detection unit and a main and standby battery switching unit. In this implementation, the main battery detection unit may be configured to detect whether the traction battery in the main battery mode fails. The main and standby battery switching unit may be configured to, if it is detected that the traction battery in the main battery mode fails, switch the battery mode of the traction battery that does not fail to the main battery mode, and switch the battery mode of the traction battery that fails to the standby battery mode.

The foregoing control apparatus for a traction battery is used to implement the embodiment of the control method for a traction battery shown in FIG. 1. The technical principles of, technical problems solved by, and technical effects provided by the control apparatus and the control method are similar, and those skilled in the art may clearly understand that, for ease and simplicity of the description, for a specific process and a related description of the control apparatus for a traction battery, reference may be made to the description of the embodiments of the control method for a traction battery, and details will not be described herein again.

Those skilled in the art can understand that some or all of the procedures of the disclosure in the method of the foregoing embodiment may also be implemented by a computer program instructing relevant hardware. The computer program may be stored in a computer-readable storage medium. The computer program, when executed by a processor, may cause the steps of the foregoing method embodiments to be implemented. The computer program includes computer program code in the form of source code, object code, executable file, or in some intermediate forms, etc. The computer-readable medium may include: any entity or device, medium, USB flash disk, removable hard disk, magnetic disk, optical disc, computer memory, read-only memory, random access memory, electrical carrier signal, telecommunications signal, software distribution medium, etc. that can carry the computer program code. It should be noted that the content included in the computer-readable medium may be appropriately added or deleted depending on requirements of the legislation and patent practice in a jurisdiction. For example, in some jurisdictions, according to the legislation and patent practice, the computer-readable medium does not comprise an electrical carrier signal and a telecommunications signal.

Further, the disclosure further provides a vehicle. In an embodiment of the vehicle according to the disclosure, the vehicle comprises a control apparatus for a traction battery according to any one of the implementations of a control apparatus for a traction battery described above, and two traction batteries connected by a bidirectional DC converter 3. In this embodiment, the vehicle includes, but is not limited to: an electric automobile and a hybrid power automobile.

Further, the disclosure further provides a computer device. In an embodiment of the computer device according to the disclosure, the computer device comprises a processor and a storage apparatus. The storage apparatus may be configured to store a program that causes the control method for a traction battery in the foregoing method embodiment to be carried out, and the processor may be configured to execute a program in the storage apparatus. The program includes, but is not limited to, the program that causes the control method for a traction battery in the foregoing embodiment of the method to be carried out. For ease of description, only parts related to the embodiment of the disclosure are shown. For specific technical details that are not disclosed, refer to the method part of the embodiments of the disclosure. The computer device may be a control device formed by various electronic devices.

Further, the disclosure further provides a computer-readable storage medium. In an embodiment of the computer-readable storage medium according to the disclosure, the computer-readable storage medium may be configured to store a program that causes the control method for a traction battery in the foregoing embodiment of the method to be carried out, and the program may be loaded and run by a processor to implement the foregoing control method for a traction battery. For ease of description, only parts related to the embodiment of the disclosure are shown. For specific technical details that are not disclosed, refer to the method part of the embodiments of the disclosure. The computer-readable storage medium may be a storage device formed by various electronic devices. Optionally, the computer-readable storage medium in an embodiment of the disclosure is a non-transitory computer-readable storage medium.

Further, it should be understood that, since the settings of the modules are merely intended to illustrate functional units of an apparatus of the disclosure, a physical device corresponding to these modules may be a processor itself, or part of software or part of hardware in the processor, or part of a combination of the software and the hardware. Therefore, the number of modules in the figure is merely illustrative.

Those skilled in the art can understand that the modules in the apparatus may be adaptively split or combined. Such a split or combination of specific modules does not cause the technical solutions to depart from the principle of the disclosure. Therefore, the technical solutions after the split or combination will all fall within the scope of protection of the disclosure.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Those skilled in the art could make equivalent changes or replacements to the related technical features without departing from the principles of the disclosure, and all the technical solutions after the changes or the replacements fall within the scope of protection of the disclosure.

## Claims

1. A control method for a traction battery, wherein the control method is applied to a vehicle, the vehicle comprises two traction batteries, and the traction batteries are connected by means of a bidirectional DC converter; and
the control method comprises:
acquiring temperature information of each of the traction batteries;
analyzing whether each of the traction batteries needs to be heated based on the temperature information; and
controlling the bidirectional DC converter and the traction battery which needs to be heated to form a charging and discharging circuit, and cyclically charging and discharging the traction battery through the charging and discharging circuit to heat the traction battery.

2. The control method for a traction battery according to claim 1, wherein the temperature information includes cell temperature of the traction battery and ambient temperature, and the step of analyzing whether each of the traction batteries needs to be heated based on the temperature information specifically comprises:
if the traction battery is in a state-before-charging and the cell temperature is less than a cell temperature threshold, determining that a first type of heating is needed for the traction battery; or
if the traction battery is in a rest state under a vehicle rest condition and the ambient temperature is less than an ambient temperature threshold, determining that a second-type heating is needed for the traction battery,
wherein the state-before-charging is a state in which a charging instruction is received before charging is started.

3. The control method for a traction battery according to claim 2, wherein the step of controlling the bidirectional DC converter and the traction battery which needs to be heated to form a charging and discharging circuit specifically comprises:
if the first type of heating is needed for one of the traction batteries, controlling the bidirectional DC converter and the traction battery which needs the first type of heating to form a charging and discharging circuit of first type, such that the traction battery and the bidirectional DC converter are capable of charging and discharging each other through the charging and discharging circuit of first type; or
if the first type of heating is needed for the two traction batteries, controlling the bidirectional DC converter and the two traction batteries to form a charging and discharging circuit of second type, such that the two traction batteries are capable of charging and discharging each other through the charging and discharging circuit of second type;
and/or
the step of controlling the bidirectional DC converter and the traction battery which needs to be heated to form a charging and discharging circuit specifically comprises:
if the second type of heating is needed for at least one of the traction batteries, forming a charging and discharging circuit for each traction battery which needs the second type of heating according to the following steps:
obtaining available power and a state of charge of the traction battery which needs the second type of heating; and
if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

4. The control method for a traction battery according to claim 3, wherein the step of cyclically charging and discharging the traction battery through the charging and discharging circuit specifically comprises:
when the traction battery which needs the first type of heating is cyclically charged and discharge through the charging and discharging circuit of first type, stopping the cyclic charging and discharging if it is detected that the cell temperature of the traction battery reaches a first preset temperature; or
when the traction battery which needs the second type of heating is cyclically charged and discharges through the charging and discharging circuit of first type, stopping the cyclic charging and discharging if it is detected that the cell temperature of the traction battery reaches the first preset temperature; or
when the two traction batteries which needs the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-controlling the bidirectional DC converter and the traction battery that does not reach the first preset temperature to form a charging and discharging circuit of first type, and continuing to cyclically charge and discharge the traction battery that does not reach the first preset temperature through the charging and discharging circuit of first type, until the cell temperature of the traction battery reaches the first preset temperature; and
stopping the cyclic charging and discharging if it is detected that the cell temperatures of the two traction batteries both reach the first preset temperature.

5. The control method for a traction battery according to any one of claims 1 to 4, further comprising:
in response to a received battery mode configuration instruction, respectively configuring the two traction batteries in a main battery mode and a standby battery mode;
and/or
detecting whether the traction battery in the main battery mode fails; and
if so, switching the battery mode of the traction battery that does not fail to the main battery mode, and switching the battery mode of the traction battery that fails to the standby battery mode.

6. A control apparatus for a traction battery, wherein the control apparatus is applied to a vehicle, the vehicle comprises two traction batteries, and the traction batteries are connected by means of a bidirectional DC converter; and
the control apparatus comprises:
a temperature information acquisition module configured to acquire temperature information of each of the traction batteries;
a heating demand analysis module configured to analyze whether each of the traction batteries needs to be heated based on the temperature information; and
a heating control module configured to control the bidirectional DC converter and the traction battery which needs to be heated to form a charging and discharging circuit, and cyclically charging and discharging the traction battery through the charging and discharging circuit to heat the traction battery.

7. The control apparatus for a traction battery according to claim 6, wherein the temperature information includes cell temperature of the traction battery and ambient temperature, and the heating demand analysis module comprises:
a first heating demand unit configured to, if it is detected that the traction battery is in a state-before-charging and the cell temperature is less than a cell temperature threshold, determine that a first type of heating is needed for the traction battery; and
a second heating demand unit configured to, if it is detected that if the traction battery is in a rest state under a vehicle rest condition and the ambient temperature is less than an ambient temperature threshold, determine that a second type of heating is needed for the traction battery,
wherein the state-before-charging is a state in which a charging instruction is received before charging is started.

8. The control apparatus for a traction battery according to claim 7, wherein the heating control module comprises a first charging and discharging unit and/or a second charging and discharging unit and/or a third charging and discharging unit;
the first charging and discharging unit is configured to, if the heating demand analysis module determines that the first type of heating is needed for one of the traction batteries, control the bidirectional DC converter and the traction battery which needs the first type of heating to form a charging and discharging circuit of first type, such that the traction battery and the bidirectional DC converter are capable of charging and discharging each other through the charging and discharging circuit of first type;
the second charging and discharging unit is configured to, if the heating demand analysis module determines that if the first type of heating is needed for the two traction batteries, control the bidirectional DC converter and the two traction batteries to form a charging and discharging circuit of second type, such that the two traction batteries are capable of charging and discharging each other through the charging and discharging circuit of second type; and
the third charging and discharging unit is configured to, if it is detected that the second type of heating is needed for at least one of the traction batteries, form a charging and discharging circuit for each traction battery which needs the second type of heating by means of the following operations:
obtaining available power and a state of charge of the traction battery which needs the second type of heating; and
if the available power is less than a power threshold and the state of charge is greater than a state-of-charge threshold, controlling the bidirectional DC converter and the traction battery to form a charging and discharging circuit of first type, such that the traction battery and the bidirectional DC converter are capable of charging and discharging each other through the charging and discharging circuit of first type.

9. The control apparatus for a traction battery according to claim 8, wherein the first charging and discharging unit is further configured to, when the charging and discharging circuit of first type cyclically charges and discharges the traction battery which needs the second type of heating, stop the cyclic charging and discharging if it is detected that the cell temperature of the traction battery reaches a first preset temperature;
the second charging and discharging unit is further configured to, when the two traction batteries which need the first type of heating are cyclically charged and discharges through the charging and discharging circuit of second type, if it is detected that the cell temperature of one of the traction batteries reaches the first preset temperature and the cell temperature of the other traction battery does not reach the first preset temperature, re-control the bidirectional DC converter and the traction battery that does not reach the first preset temperature to form a charging and discharging circuit of first type, and continue to cyclically charge and discharge the traction battery that does not reach the first preset temperature through the charging and discharging circuit of first type, until the cell temperature of the traction battery reaches the first preset temperature; and stop the cyclic charging and discharging if it is detected that the cell temperatures of the two traction batteries both reach the first preset temperature; and
the third charging and discharging unit is further configured to, when the charging and discharging circuit of first type cyclically charges and discharges the traction battery which needs the second type of heating, stop the cyclic charging and discharging if it is detected that the cell temperature of the traction battery reaches a second preset temperature.

10. The control apparatus for a traction battery according to any one of claims 6 to 9, wherein the control apparatus further comprises a main and standby battery configuration module and/or a main and standby battery switching module, the main and standby battery switching module comprising a main battery detection unit and a main and standby battery switching unit; wherein
the main and standby battery configuration module is configured to, in response to a received battery mode configuration instruction, respectively configure the two traction batteries in a main battery mode and a standby battery mode;
the main battery detection unit is configured to detect whether the traction battery in the main battery mode fails; and
the main and standby battery switching unit is configured to, if it is detected that the traction battery in the main battery mode fails, switch the battery mode of the traction battery that does not fail to the main battery mode, and switch the battery mode of the traction battery that fails to the standby battery mode.

11. A computer device, comprising a processor and a memory, wherein the memory is adapted to store a plurality of program codes, the program codes are adapted to be loaded and run by the processor to cause a control method for a traction battery to be carried out, the control method is applied to a vehicle, the vehicle comprises two traction batteries, and the traction batteries are connected by means of a bidirectional DC converter; and
the control method comprises:
acquiring temperature information of each of the traction batteries;
analyzing whether each of the traction batteries needs to be heated based on the temperature information; and
controlling the bidirectional DC converter and the traction battery which needs to be heated to form a charging and discharging circuit, and cyclically charging and discharging the traction battery through the charging and discharging circuit to heat the traction battery.
